# EUROPEAN PATENT SPECIFICATION

(11) **EP 2 506 056 B1**
(45) Date of publication and mention of the grant of the patent: **04.10.2017**
(21) Application number: 12162368.0
(22) Date of filing: 30.03.2012
(51) Int. Cl.: G02B 6/44

(54) **CASSETTE FOR CONTAINING A SPLICE ELEMENT**
KASSETTE ZUR AUFBEWAHRUNG EINES SPLEISSELEMENTES
CASSETTE POUR CONTENIR UN ÉLÉMENT D'ÉPISSURE

(30) Priority: 31.03.2011 NL 2006501
(43) Date of publication of application: 03.10.2012
(73) Proprietor: Attema B.V., 4203 NJ Gorinchem (NL)
(72) Inventor: SCHUMACHER, Paulus Michael Johannes, 5283 LN Boxtel (NL)
(74) Representative: EP&C

(56) References cited:
- EP-A1- 0 903 594
- US-A1- 2008 169 116
- US-A1- 2010 150 516
- US-B1- 6 333 463

## Description

The invention relates to the field of optical fibers. In particular, the invention relates to storing a splice element connecting optical fibers. More in particular, the invention relates to a cassette for containing a splice element, the cassette comprising a bottom part.

In many communication networks, nodes of the networks are connected by optical cables containing optical fibers. At the nodes, telecommunication equipment, such as routers and switches, is connected to these optical fibers. Furthermore, also in datacenters servers and other equipment may be connected with incoming and outgoing optical fibers. In the periphery of fiber optic networks, optical fibers may need to be connected to other fibers.

Equipment may be installed to manage a plurality of incoming and outgoing cables and fibers. Cassettes are often used to store an excess length of (incoming or outgoing) fiber, wherein the excess length of fiber may be needed for future connections. Usually, one or more splice elements and an excess length of optical fiber are contained in such cassettes. The splice element comprises the connection of at least two fibers and assures that the optical connection between the fibers remains of good quality.

Cassettes have been provided with adhesive tape to adhere to both the spice element and the cassette in order to fixate the splice element inside the cassette. However, splice elements may have different shapes and dimensions and it has appeared that cassettes with adhesive tape are not able to provide sufficient fixation for all kinds of splice elements with different shapes and dimensions. An adhesive tape adheres to a limited surface area part of the splice element only, which results in an unreliable connection. In the course of time, the adherence strength may degrade.

After releasing an adherence between the adhesive tape and the splice element, e.g. during maintenance work, the adherence surface may become polluted and a re-adherence may then provide a weak connection.

As a result, a splice element in such a cassette may travel through the cassette and may cause tangles in the optical fibers, or otherwise damage the optical fibers.

Reference US 6 333 463 discloses a cable splice enclosure for scaling a multicore cable, wherein the cable splice enclosure defines a sealant material reservoir comprising a sealant material.

Reference US 2010/150 516 discloses a fixation of spliced optical fibers in a resilient material based on a press fit, which is brought about by closing a hinged lid of a box.

It is an object of the invention to provide a cassette that provides sufficient and reliable fixation for splice elements with different shapes and dimensions. This objective is met by providing a cassette comprising a cap arranged to be joined to the bottom of the cassette in a closed position and resilient material arranged between the bottom part and the cap in the closed position and arranged to contact the splice element in the closed position, wherein the bottom part and the cap are arranged to fixate the splice element in the closed position by means of a press fit between the resilient material and the splice element, wherein the resilient material comprises parts of resilient material, with space between the parts of resilient material.

A press fit may also be referred to as an interference fit or friction fit. In such a fit, fastening is achieved by friction when two elements are pushed together. In this case, the bottom part and the cap of the cassette may be pushed together in the closed position. Between the bottom part and the cap, the resilient material and the splice element are disposed. Thus, the resilient material and the splice element may be in contact and/or may also be pushed together and the friction between the splice element and the resilient material may be increased. In this way, the splice element is fixated at its position in the cassette. Since the shape or the form of resilient material can be changed, the resilient material may deform and adapt itself to different shapes and dimensions of the splice element, when it is pushed together with the splice element. Therefore, differently shaped splice elements can be fixated or fastened in the cassette according to the invention in the closed position.

In the cassette according to the invention, the resilient material comprises parts of resilient material, and may be arranged in one or more spaced strips, or applied in a checkered pattern or as a diamond mesh. An advantage of this configuration may be that the resilient material may deform and occupy the spaces between the parts of the resilient material, when the resilient material is pushed together with the splice element. This configuration may thus increase the ability of the resilient material to deform and to adapt itself to various shapes and dimensions of splice elements.

In an embodiment of the cassette according to the invention, a longitudinal direction of the one or more strips is perpendicular to a longitudinal direction of the splice element. Since splice elements usually have an elongated form, this configuration provides spaces between the strips while a large contact surface between the resilient material and the splice element is established in the closed position.

In an embodiment of the cassette according to the invention, the cap is hingedly connected to the bottom part. When the cap is hingedly connected to the bottom, the cassette may be easily operated by user. The user may put the cap in the closed position and in an open position without detaching the cap from the cassette. Accordingly, the user can not inadvertently lose the cap.

In an embodiment of the cassette according to the invention, the cassette comprises a snap-in construction for joining the cap with the bottom part in the closed position. The snap-in construction may enable the user to join the bottom part and the cap in the closed position without the need of additional tools. Furthermore, the snap-in construction may provide the pressure needed to push the resilient material and the splice element together.

In an embodiment of the cassette according to the invention, the resilient material is arranged (or disposed) on at least one of: a surface of the cap and a surface of the bottom part. When the resilient material is provided on and preferably connected to a surface of the cap or a surface of the bottom part, the user may open and close the cap (i.e. put the cap in the closed position and in the open position respectively) without the risk that the resilient material may fall out of the cassette.

Furthermore, when the resilient material is arranged on both the bottom part and the cap, the splice element may be more or less enclosed by the resilient material. This may increase the friction the splice element experiences in the closed position and improve the fixation.

In an embodiment of the cassette according to the invention, at least one of the bottom part and the cap part comprises a recess arranged to accommodate at least a part of the resilient material. This configuration may advantageously enable an easy positioning of the resilient material in the bottom part and/or the cap.

In an embodiment of the cassette according to the invention, the resilient material comprises a recess arranged to accommodate at least a part of the splice element. When the splice element is accommodated by or partly inserted in the recess, the position of the splice element may be somewhat fixed, both in the open position and in the closed position of the cassette. This may prevent the splice element from falling out of the cassette in the open position. Furthermore, in the closed position, when the splice element is party inserted in the resilient material, the splice element will be more enclosed by the resilient material. This may increase the friction the splice element experiences in the closed position.

In an embodiment of the cassette according to the invention, the resilient material comprises foam rubber. Foam rubber may be deformed easily in a resilient way and it may provide a large friction, when it contacts the splice element.

In an embodiment of the cassette according to the invention, the cassette is arranged to contain optical fibers, wherein the splice element connects two optical fibers.

In an embodiment of the cassette according to the invention, in the closed position, a distance between:
the resilient material on the surface of the bottom part, and the cap; or
the resilient material on the surface of the cap, and the bottom part; or
the resilient material on the surface of the bottom part, and the resilient material on the surface of the cap;
is smaller than a height or a diameter of the splice element.

In this configuration, there may not be enough space between the cap and the bottom part to hold the splice element and the resilient material in the closed position without deforming the resilient material at least somewhat. Since the deforming of the resilient material may increase the friction the splice element is experiencing, the fixation of the splice element may be improved in this the configuration.

In an embodiment of the cassette according to the invention the cassette further comprises an adhesive coating arranged on one of: the bottom part, the cap, the resilient material on the surface of the bottom part and the resilient material on the surface of the cap, wherein the adhesive coating is arranged to adhere to the splice element.

An adhesive coating is advantageous in that the cassette is able to hold the splice element in the open position of the cassette. This may prevent the splice element from falling out of the cassette, while, for example, a user is working with the optical fibers in the cassette.

In an embodiment of the cassette according to the invention, in the closed position, the distance between
the resilient material on the surface of the bottom part, and the cap; or
the resilient material on the surface of the cap, and the bottom part; or
the resilient material on the surface of the bottom part, and the resilient material on the surface of the cap;
is larger than a thickness of the adhesive coating.

This configuration may enable that in the closed position without a splice element in the cassette, the adhesive coating is prevented from joining the cap and the bottom part together, since the joining of the cap and the bottom part together by the adhesive coating would hinder a user opening the cassette.

In an embodiment of the cassette according to the invention, the cassette further comprises the splice element.

Embodiments of the invention will be described, by way of example only, with reference to the accompanying schematic drawings in which corresponding reference symbols indicate corresponding or similar parts, and in which:
Figure 1 shows a schematic representation of a cassette, in an open position;
Figure 2a shows a schematic representation of a cassette, for example the embodiment of figure 1, in an closed position;
Figure 2b shows a schematic representation of a cross section of a cassette according to figure 2a along the line A-A with a splice element disposed in the cassette.
Figure 2c shows another schematic representation of a cross section of a cassette according to figure 2a along the line A-A with another splice element disposed in the cassette;
Figures 3a and 3b show exemplary embodiments of splice elements;
Figure 4a shows a schematic representation of a cassette according to an embodiment of the invention, in an open position;
Figure 4b shows a schematic representation of a cross section of a part of the cassette of the embodiment of figure 4a taken along the line B-B;
Figure 4c shows another schematic representation of a cross section of a part of the cassette of the embodiment of figure 4a in a closed position along the line B-B with a splice element disposed in the cassette;
Figure 5 shows a schematic representation of a cassette, for example the embodiment of figure 1, in the open position; and,
Figure 6 shows a schematic representation of a cross section of a part of a cassette, for example the embodiment of figure 2 or an embodiment of the cassette according to the invention, in the closed position without a splice element disposed in the cassette.

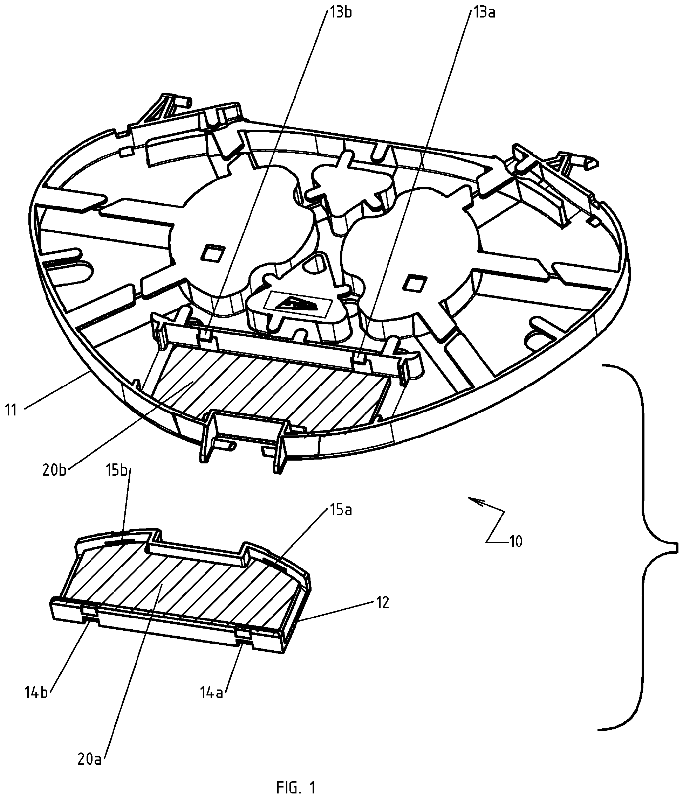

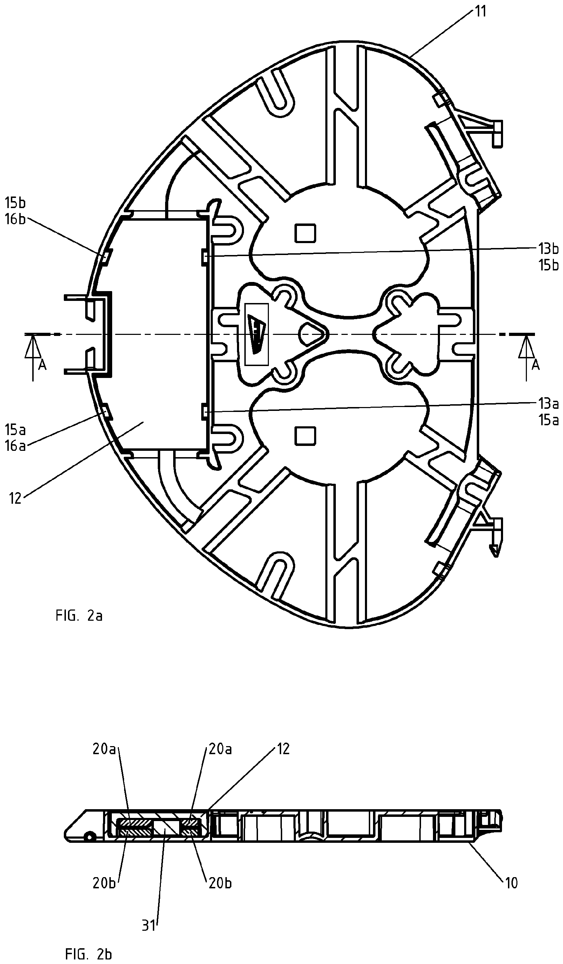

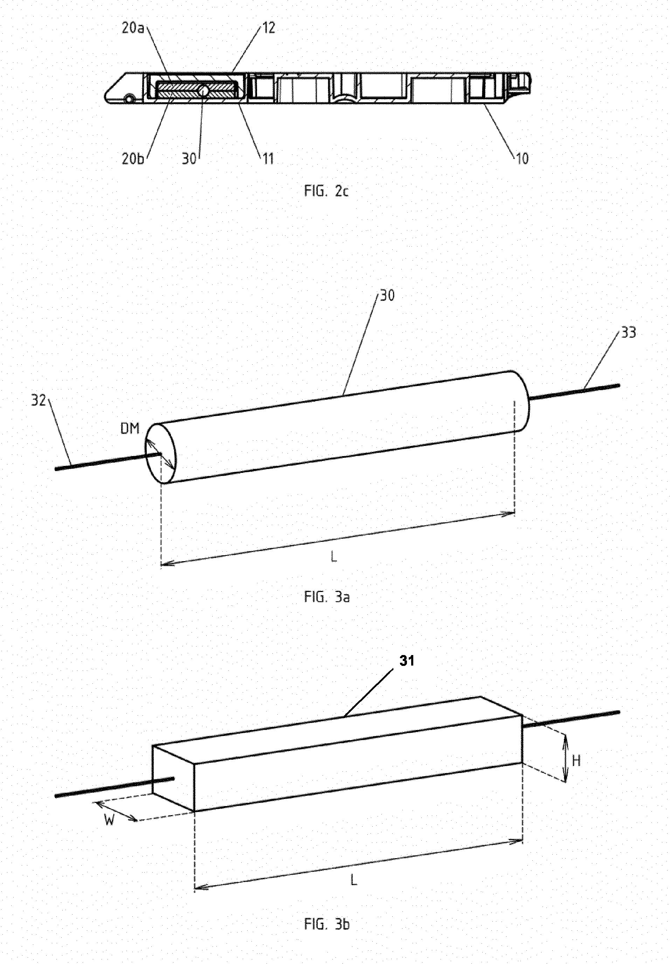

Figure 1 shows a cassette 10. The cassette comprises a bottom part 11 and a cap 12. Figure 1 shows the cassette in the open position, while figures 2a, 2b and 2c show the cassette in the closed position. In the closed position, cap 12 is joined together with bottom part 11. Although not shown in the figures, at one side of the cap 12, the cap 12 may be hingedly connected to bottom part 11.

The cassette is provided with resilient material 20a, 20b. The resilient material 20a may be provided on the cap 12 and the resilient material 20b may be provided on the bottom part 11. The resilient material may be disposed on and preferably connected to the cap 12 and/or the bottom part 11. The resilient material may be glued to the cap 12 and/or the bottom part 11. The resilient material may also be connected to the cap 12 and/or bottom part 11 by using a tape which is adhesive on both sides. One side of the tape adheres the tape to the cap 12 and/or the bottom part 11 and the other side of the tape adheres the tape to the resilient material.

The resilient material may comprise foam rubber, for example a layer of foam rubber may be applied on the cap 12 and/or the bottom part 11. The resilient material may also comprise a spongy material, a gel or another soft material.

In the embodiments of figures 1 and 2a, the cassette comprises a snap-in construction 13a, 13b, 14a, 14b, 15a, 15b, 16a, 16b. The snap-in construction may be provided with recesses 14a, 14b, 15a, 15b in the cap 12 and with corresponding projections 13a, 13b, 16a, 16b on the bottom part 11. When the projections are inserted in the recesses and "snapped-in", the cap 12 may be joined with bottom part 11. This is the closed position of the cassette 10.

Because of the snap-in construction, the cap 12 may be easily released from the bottom part 11 by a user and the cassette is then in its open position. It may also be the case that the recesses are provided in the bottom part 11 and the projections are arranged on the cap 12. Other constructions that provide a releasable connection between the cap 12 and the bottom part 11 may also be used.

Figures 3a and 3b show exemplary embodiments of splice elements. Splice element 30 has a cylindrical shape and comprises a fiber connection between optical fibers 32 and 33. The length L of such a cylindrical splice element is in the range of 20-100 mm, preferably in the range of 50-70 mm, or more preferably 60 mm, while its diameter DM may be in the range of 1-10 mm, preferably in the range of 2-5 mm, or more preferably 3 mm. Splice element 31 has a rectangular shape and may have a length L in the range of 20-100 mm, preferably in the range of 50-70 mm, or more preferably of 60 mm. Its height H may be in the range of 1-10 mm, preferably in the range of 2-6 mm or more preferably 4 mm. Its width W may be in the range of 1-10 mm, preferably in the range 5-9 mm, or more preferably 7 mm. However, in practice also splice elements with other shapes and dimension may be contained in embodiments of the cassette according to the invention.

In figure 2a a cassette 10 is shown in the closed position, wherein a splice element 31, 32 is located between the cap 12 and the bottom part 11 of the cassette.

Figure 2b shows a schematic representation of a cross section of figure 2a at the line indicated by A in figure 2a, when a splice element 31 with a rectangular shape has been fixated in the cassette. It can be seen in figure 2b that the resilient material 20a, 20b has been deformed and is in contact with the splice element 31. Because of this, the friction between the splice element 31 and the resilient material 20a, 20b may be increased and the splice element 31 is fixated. By pushing the cap 12 and the bottom part 11 together and joining them together, a press fit has been applied to splice element 31. As a consequence, the splice element 31 can not be (easily) moved from its position.

Figure 2c also shows a schematic representation of a cross section of figure 2a at the line indicated by A in figure 2a, but in this case a splice element 30 with a cylindrical shape has been located between the cap 12 and the bottom part 11. It can be seen in figure 2c that the resilient material 20a, 20b has been deformed in a different way than in the case when a rectangular shaped splice element 31 were located between the cap 12 and the bottom part 11, as is shown in figure 2b. In figure 2c, the resilient material has been deformed differently, but is still in contact with splice element 30. Thus, also in this case, the splice element 30 is fixated by the friction between the splice element 30 and the resilient material 20a, 20b.

It may thus be understood that the resilient material may adopt itself to (or deform in accordance with) the shape and dimensions of the splice element. Therefore, a contact area, where the resilient material contacts the splice element, is established. When the cap 12 and bottom part 11 are pushed together, friction between the resilient material and the splice element across this contact area may be increased and this improves the fixation of the splice element in its position.

In figures 2a, 2b and 2c the resilient material 20a, 20b is arranged on both (a surface of) the cap 12 and (a surface of) the bottom part 11, but the splice element 30, 31 may also be fixated when resilient material is arranged only on one of the cap 12 and the bottom part 11.

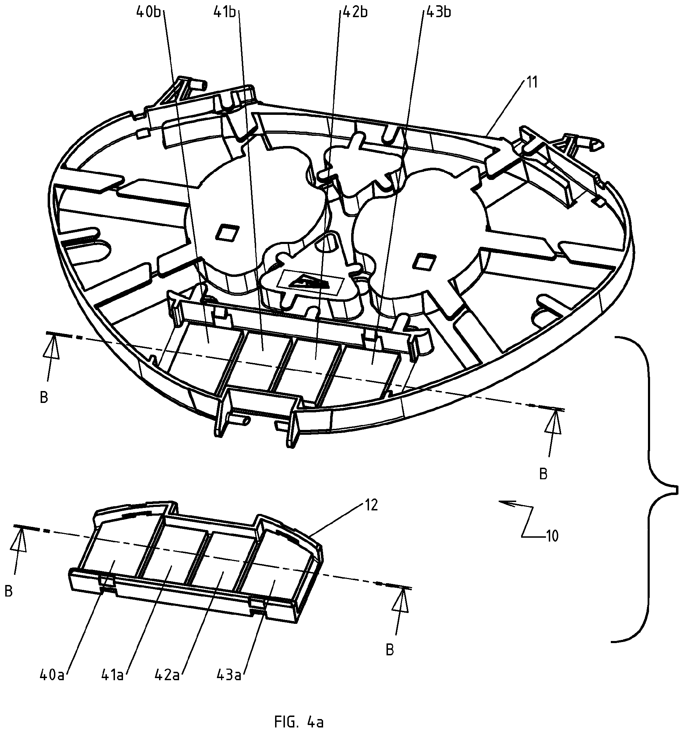

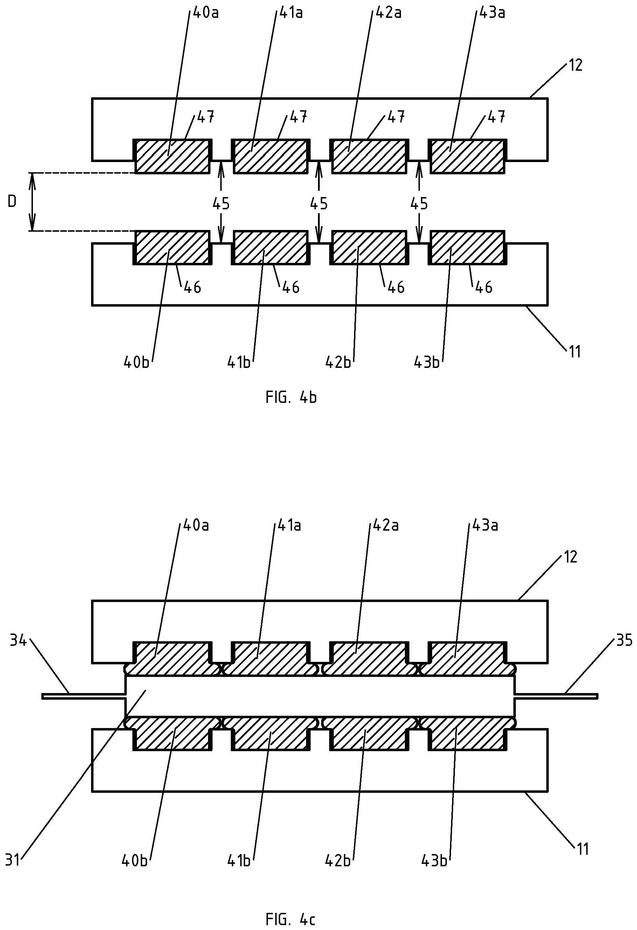

In figures 4a, 4b and 4c a cassette 10 according to an embodiment of invention is shown. In this embodiment, the resilient material has been arranged in four strips 40a, 41a, 42a, 43a on the cap 12 and in four strips 40b, 41b, 42b, 43b on the bottom part 11.

In figure 4b a schematic representation is shown of a cross section of the cassette of figure 4a at the line indicated by B-B in figure 4a, but the cassette is in the closed position, while figure 4a shows the cassette in the open position. Spaces 45 are formed between the strips 40a, 41a, 42a, 43a and strips 40b, 41b, 42b, 43b of resilient material. Figure 4c shows another schematic representation of a cross section of the cassette of figure 4a at the line indicated by B-B in figure 4a, but in the closed position and with splice element 31 in a press-fit with the resilient material.

In figure 4c the splice element 31 and the resilient material are pushed together between the cap 11 and the bottom part 12. The strips of resilient material are deformed and occupy at least a part of the spaces 45 between the strips of resilient material. The spaces between the strips of resilient material may therefore enable an easy deformation of the resilient material. This may increase the ability of the resilient material to deform and to adapt itself to various shapes and dimensions of splice elements.

In the embodiment of figures 4a, 4b and 4c, the longitudinal direction of the eight strips is perpendicular to the longitudinal direction of the splice element. However, another quantity of strips and orientation of the strips on the cap 12 and/or the bottom part 11 may also be applied. For example, the strips may only be applied at one of the cap 12 and the bottom part 11.

The resilient material may e.g. also be applied in a checkered pattern or as a diamond mesh.

In the embodiment of figures 4a, 4b and 4c, both the bottom part 11 and the cap 12 comprises recesses 46, 47 that are arranged to accommodate a part of the resilient material. In the case of figures 4a, 4b and 4c all strips are accommodated in recesses, but this may not be necessary: in an embodiment only some, or none of the strips may be accommodated in recesses.

The distance between the resilient material on the cap 12 and the resilient material on the bottom part 11 in the closed position, which is indicated by D in figure 4b, may be smaller than the height H of splice element 31. In that case, when the cap 12 and the bottom part 11 are joined together in the closed position with the splice element 31 in between, the resilient material will definitely be in contact with the splice element 31 in the closed position, and will deform at least somewhat.

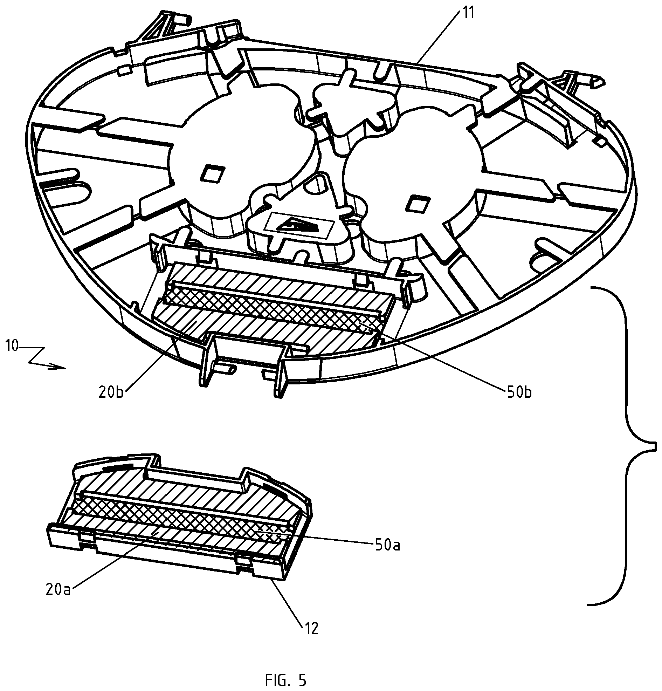

Furthermore, the resilient material may comprise recesses 50a, 50b to accommodate the splice element as illustrated in figure 5 for continuous parts of resilient material 20a, 20b. The shape and the dimensions of these recesses may correspond with, or be slightly smaller than the shape and dimensions of the splice element.

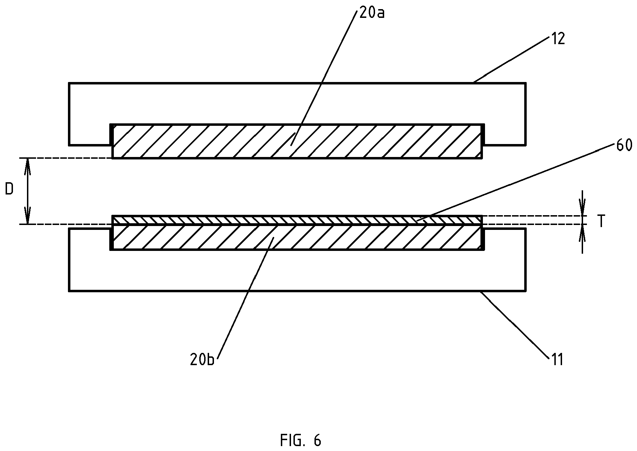

Figure 6 shows a schematic representation of a cross section of an embodiment of a part of the cassette according to the invention. In the embodiment of figure 6, an adhesive coating 60 is arranged on a resilient material 20b, which is arranged on the bottom part 11. The adhesive coating may be a tape which is adhesive on both sides.

In the open position, the adhesive coating may be used for holding the splice element at the same place, while a user is working, for example with the optical fibers, with the cassette. In figure 6, a thickness of the adhesive coating is indicated by T. To prevent the adhesive coating 60 from adhering to the resilient material 20a on the cap 12, a distance D between the resilient material 20a on the cap 12 and the resilient material 20b on the bottom part 11 should be larger than a thickness of the adhesive coating in the closed position. Therefore, in an embodiment of the cassette according to the invention, this distance D is larger than the thickness T.

It can be understood that the above may also be applicable when resilient material is arranged only on either the cap 12 or the bottom part 11. In that case, the distance D may be defined as the distance between the resilient material 20b on the surface of the bottom part 11 and the cap 12, or the distance between the resilient material 20a on the surface of the cap 12, and the bottom part 11.

In an embodiment, an adhesive coating may be arranged on the resilient material, which is arranged on the bottom part 11, and another adhesive coating may be arranged on the resilient material, which is arranged on the cap 12. In that case, the distance D may be defined as the distance between the resilient material 20b on the surface of the bottom part 11, and the resilient material on the surface of the cap 12.

In an embodiment of the cassette according to the invention, the cassette may further comprise a splice element, preferably a splice element that has been described in the above.

As explained above, a cassette for containing a splice element is provided. The cassette comprises a bottom part and a cap, that may be joined together in a closed position. Resilient material is provided between the bottom part and the cap in the closed position. In the closed position, the resilient material contacts the splice element and fixates the splice element by means of a press fit between the resilient material and the splice element. The resilient material comprises parts of resilient material, with space between the parts of resilient material. The resilient material may be arranged in spaced strips, or applied in a checkered pattern or as a diamond mesh.

It is to be understood that the disclosed embodiments are merely exemplary of the invention, which can be embodied in various forms. Therefore, specific structural and functional details disclosed herein are not to be interpreted as limiting, but merely as a basis for the claims and as a representative basis for teaching one skilled in the art to variously employ the present invention in virtually any appropriately detailed structure. Furthermore, the terms and phrases used herein are not intended to be limiting, but rather, to provide an understandable description of the invention. Elements of the above mentioned embodiments may be combined to form other embodiments.

The terms "a" or "an", as used herein, are defined as one or more than one. The term another, as used herein, is defined as at least a second or more. The terms including and/or having, as used herein, are defined as comprising (i.e., not excluding other elements or steps). Any reference signs in the claims should not be construed as limiting the scope of the claims or the invention. The mere fact that certain measures are recited in mutually different dependent claims does not indicate that a combination of these measures cannot be used to advantage. The scope of the invention is only limited by the following claims.

## Claims

1. Cassette (10) for containing a splice element (30; 31), the cassette comprising:
- a bottom part (11) and a cap (12) arranged to be joined together in a closed position; and
- resilient material (20a, 20b) arranged between the bottom part and the cap in the closed position and arranged to contact the splice element in the closed position, wherein the resilient material comprises parts (40a, 41a, 42a, 43a, 40b, 41b, 42b, 43b) of resilient material, with space (45) between the parts (40a, 41a, 42a, 43a, 40b, 41b, 42b, 43b) of resilient material,
wherein the bottom part (11) and the cap (12) are arranged to fixate the splice element (30; 31) in the closed position by means of a press fit between the resilient material (20a, 20b) and the splice element (30; 31),
**characterized in that** the resilient material is arranged in spaced strips (40a, 41a, 42a, 43a, 40b, 41b, 42b, 43b) on the cap (12) and/or the bottom part (11), or is applied in a checkered pattern or as a diamond mesh.

2. Cassette (10) according to claim 1, wherein a longitudinal direction of the strips (40a, 41a, 42a, 43a, 40b, 41b, 42b, 43b) is perpendicular to a longitudinal direction of the splice element (30; 31).

3. Cassette (10) according to any of the preceding claims, wherein the cap (12) is hingedly connected to the bottom part (11).

4. Cassette (10) according to any of the preceding claims, wherein the cassette (10) comprises a snap-in construction for joining the cap (12) with the bottom part (11) in the closed position.

5. Cassette (10) according to any of the preceding claims, wherein the resilient material (20a, 20b) is arranged on at least one of: a surface of the cap (12) and a surface of the bottom part (11).

6. Cassette (10) according to any of the preceding claims, wherein at least one of the bottom part (11) and the cap (12) comprises a recess arranged to accommodate at least a part of the resilient material (20a, 20b).

7. Cassette (10) according to any of the preceding claims, wherein the resilient material (20a, 20b) comprises a recess (50a, 50b) arranged to accommodate at least a part of the splice element (30; 31).

8. Cassette (10) according to any of the preceding claims, wherein the resilient material (20a, 20b) comprises foam rubber.

9. Cassette (10) according to any of the preceding claims, wherein the cassette (10) is arranged to contain optical fibers connected by the splice element (30; 31).

10. Cassette (10) according to any of the preceding claims, wherein, in the closed position, a distance between
- the resilient material (20b) on the surface of the bottom part (11), and the cap (12); or
- the resilient material (20a) on the surface of the cap (12), and the bottom part (11); or
- the resilient material (20b) on the surface of the bottom part (11), and the resilient material (20a) on the surface of the cap (12);
is smaller than a height or a diameter of the splice element (30; 31).

11. Cassette (10) according to any of the preceding claims, further comprising an adhesive coating (60) arranged on one of: the bottom part (11), the cap (12), the resilient material (20b) on the surface of the bottom part (11) and the resilient material (20a) on the surface of the cap (12), wherein the adhesive coating (60) is arranged to adhere to the splice element (30; 31).

12. Cassette (10) according to claim 11, wherein, in the closed position, the distance between
- the resilient material (20b) on the surface of the bottom part (11), and the cap (12); or
- the resilient material (20a) on the surface of the cap (12), and the bottom part (11); or
- the resilient material (20b) on the surface of the bottom part (11), and the resilient material (20a) on the surface of the cap (12);
is larger than a thickness of the adhesive coating (60).

13. Cassette (10) according to any of the preceding claims, further comprising the splice element (30; 31).

## Patentansprüche

1. Kassette (10) zum Enthalten von einem Spleisselement (30; 31), wobei die Kassette das Folgende umfasst:
- einen Bodenteil (11) und einen Deckel (12), die so angeordnet sind, dass sie in einer geschlossenen Position miteinander verbunden sind; und
- ein elastisches Material (20a, 20b), das in der geschlossenen Position zwischen dem Bodenteil und dem Deckel angeordnet ist und das so angeordnet ist, dass es in der geschlossenen Position mit dem Spleisselement in Kontakt tritt, wobei das elastische Material Teile (40a, 41a, 42a, 43a, 40b, 41b, 42b, 43b) aus elastischem Material umfasst, wobei ein Abstand (45) zwischen den Teilen (40a, 41a, 42a, 43a, 40b, 41b, 42b, 43b) aus elastischem Material vorhanden ist,
wobei der Bodenteil (11) und der Deckel (12) so angeordnet sind, dass sie das Spleisselement (30; 31) in der geschlossenen Position durch eine Presspassung zwischen dem elastischen Material (20a, 20b) und dem Spleisselement (30; 31) fixieren,
**dadurch gekennzeichnet, dass** das elastische Material in in Abständen zueinander angeordneten Streifen (40a, 41a, 42a, 43a, 40b, 41b, 42b, 43b) auf dem Deckel (12) und/oder dem Bodenteil (11) angeordnet ist, oder es in einem karierten Muster oder als Rautenmaschen aufgebracht ist.

2. Kassette (10) nach Anspruch 1, wobei eine Längsrichtung von den Streifen (40a, 41a, 42a, 43a, 40b, 41b, 42b, 43b) rechtwinklig zu einer Längsrichtung von dem Spleisselement (30; 31) verläuft.

3. Kassette (10) nach einem der vorhergehenden Ansprüche, wobei der Deckel (12) mit dem Bodenteil (11) gelenkig verbunden ist.

4. Kassette (10) nach einem der vorhergehenden Ansprüche, wobei die Kassette (10) eine Einschnappkonstruktion zum Verbinden von dem Deckel (12) mit dem Bodenteil (11) in der geschlossenen Position umfasst.

5. Kassette (10) nach einem der vorhergehenden Ansprüche, wobei das elastische Material (20a, 20b) auf mindestens einem von: einer Oberfläche von dem Deckel (12) und einer Oberfläche von dem Bodenteil (11), angeordnet ist.

6. Kassette (10) nach einem der vorhergehenden Ansprüche, wobei mindestens einer von dem Bodenteil (11) und dem Deckel (12) eine Aussparung umfasst, die angeordnet ist, um mindestens einen Teil von dem elastischen Material (20a, 20b) zu beherbergen.

7. Kassette (10) nach einem der vorhergehenden Ansprüche, wobei das elastische Material (20a, 20b) eine Aussparung (50a, 50b) umfasst, die angeordnet ist, um mindestens einen Teil von dem Spleisselement (30; 31) zu beherbergen.

8. Kassette (10) nach einem der vorhergehenden Ansprüche, wobei das elastische Material (20a, 20b) einen Schaumgummi umfasst.

9. Kassette (10) nach einem der vorhergehenden Ansprüche, wobei die Kassette (10) angeordnet ist, um optische Fasern, die durch das Spleisselement (30; 31) verbunden sind, zu enthalten.

10. Kassette (10) nach einem der vorhergehenden Ansprüche, wobei in der geschlossenen Position ein Abstand zwischen
- dem elastischen Material (20b) auf der Oberfläche von dem Bodenteil (11), und dem Deckel (12); oder
- dem elastischen Material (20a) auf der Oberfläche von dem Deckel (12), und dem Bodenteil (11); oder
- dem elastischen Material (20b) auf der Oberfläche von dem Bodenteil (11), und dem elastischen Material (20a) auf der Oberfläche von dem Deckel (12);
geringer als eine Höhe oder ein Durchmesser von dem Spleisselement (30; 31) ist.

11. Kassette (10) nach einem der vorhergehenden Ansprüche, ferner umfassend eine Klebebeschichtung (60), die auf einem der Folgenden angeordnet ist; dem Bodenteil (11), dem Deckel (12), dem elastischen Material (20b) auf der Oberfläche von dem Bodenteil (11) und dem elastischen Material (20a) auf der Oberfläche von dem Deckel (12), wobei die Klebebeschichtung (60) so angeordnet ist, dass sie an dem Spleisselement (30; 31) klebt.

12. Kassette (10) nach Anspruch 11, wobei in der geschlossenen Position der Abstand zwischen
- dem elastischen Material (20b) auf der Oberfläche von dem Bodenteil (11), und dem Deckel (12); oder
- dem elastischen Material (20a) auf der Oberfläche von dem Deckel (12), und dem Bodenteil (11); oder
- dem elastischen Material (20b) auf der Oberfläche von dem Bodenteil (11), und dem elastischen Material (20a) auf der Oberfläche von dem Deckel (12);
größer als eine Dicke von der Klebebeschichtung (60) ist.

13. Kassette (10) nach einem der vorhergehenden Ansprüche, ferner umfassend das Spleisselement (30; 31).

## Revendications

1. Cassette (10) pour contenir un élément d'épissure (30 ; 31), la cassette comprenant:
- une partie inférieure (11) et un capuchon (12) disposés pour être réunis dans une position fermée, et
- du matériau élastique (20a, 20b) agencé entre la partie inférieure et le capuchon dans la position fermée et agencé pour entrer en contact avec l'élément d'épissure en position fermée, dans lequel le matériau élastique comprend des parties (40a, 41a, 42a, 43a, 40b, 41b, 42b, 43b) de matériau élastique, avec un espace (45) entre les parties (40a, 41a, 42a, 43a, 40b, 41b, 42b, 43b) de matériau élastique,
dans laquelle la partie inférieure (11) et le capuchon (12) sont agencés pour fixer l'élément d'épissure (30 ; 31) dans la position fermée au moyen d'une presse ajustée entre le matériau élastique (20a, 20b) et l'élément d'épissure (30 ; 31),
**caractérisée en ce que** le matériau élastique est agencé en bandes espacées (40a, 41a, 42a, 43a, 40b, 41b, 42b, 43b) sur le capuchon (12) et/ou la partie inférieure (11), ou est appliqué selon un motif à damier ou sous forme de maille de diamant.

2. Cassette (10) selon la revendication 1, dans laquelle une direction longitudinale des bandes (40a, 41a, 42a, 43a, 40b, 41b, 42b, 43b) est perpendiculaire à une direction longitudinale de l'élément d'épissure (30 ; 31).

3. Cassette (10) selon l'une quelconque des revendications précédentes, dans laquelle le capuchon (12) est relié de manière articulée à la partie inférieure (11).

4. Cassette (10) selon l'une quelconque des revendications précédentes, dans laquelle la cassette (10) comprend une construction à encliquetage pour joindre le capuchon (12) avec la partie inférieure (11) en position fermée.

5. Cassette (10) selon l'une quelconque des revendications précédentes, dans laquelle le matériau élastique (20a, 20b) est agencé sur au moins l'une parmi : une surface du capuchon (12) et une surface de la partie inférieure (11).

6. Cassette (10) selon l'une quelconque des revendications précédentes, dans laquelle au moins un de la partie inférieure (11) et du capuchon (12) comprend un évidement agencé pour loger au moins une partie du matériau élastique (20a, 20b).

7. Cassette (10) selon l'une quelconque des revendications précédentes, dans laquelle le matériau élastique (20a, 20b) comprend un évidement (50a, 50b) agencé pour loger au moins une partie de l'élément d'épissure (30 ; 31).

8. Cassette (10) selon l'une quelconque des revendications précédentes, dans laquelle le matériau élastique (20a, 20b) comprend un caoutchouc en mousse.

9. Cassette (10) selon l'une quelconque des revendications précédentes, dans laquelle la cassette (10) est agencée pour contenir des fibres optiques connectées par l'élément d'épissure (30 ; 31).

10. Cassette (10) selon l'une quelconque des revendications précédentes, dans laquelle, dans la position fermée, une distance entre
- le matériau élastique (20b) sur la surface de la partie inférieure (11), et le capuchon (12), ou
- le matériau élastique (20a) sur la surface du capuchon (12), et la partie inférieure (11), ou
- le matériau élastique (20b) sur la surface de la partie inférieure (11), et le matériau élastique (20a) sur la surface du capuchon (12),
est inférieure à une hauteur ou un diamètre de l'élément d'épissure (30 ; 31).

11. Cassette (10) selon l'une quelconque des revendications précédentes, comprenant en outre un revêtement adhésif (60) agencé sur l'un de : la partie inférieure (11), le capuchon (12), le matériau élastique (20b) sur la surface de la partie inférieure (11) et le matériau élastique (20a) sur la surface du capuchon (12), dans laquelle le revêtement adhésif (60) est agencé pour adhérer à l'élément d'épissure (30 ; 31).

12. Cassette (10) selon la revendication 11, dans laquelle dans la position fermée, la distance entre
- le matériau élastique (20b) sur la surface de la partie inférieure (11), et le capuchon (12), ou
- le matériau élastique (20a) sur la surface du capuchon (12), et la partie inférieure (11), ou
- le matériau élastique (20b) sur la surface de la partie inférieure (11), et le matériau élastique (20a) sur la surface du capuchon (12),
est plus grande qu'une épaisseur du revêtement adhésif (60).

13. Cassette (10) selon l'une quelconque des revendications précédentes, comprenant en outre l'élément d'épissure (30 ; 31).
